(19) Europäisches Patentamt
European Patent Office
Office européen des brevets

(11) Veröffentlichungsnummer : **0 095 740 B2**

(12) **NEUE EUROPÄISCHE PATENTSCHRIFT**

(45) Veröffentlichungstag der neuen Patentschrift : **21.11.91 Patentblatt 91/47**

(51) Int. Cl.$^5$ : **C09B 67/24**, C09B 67/06, D06P 3/02

(21) Anmeldenummer : **83105234.5**

(22) Anmeldetag : **26.05.83**

# (54) Feste Präparate von Metallkomplexfarbstoffen.

(30) Priorität : **27.05.82 DE 3220042**

(43) Veröffentlichungstag der Anmeldung : **07.12.83 Patentblatt 83/49**

(45) Bekanntmachung des Hinweises auf die Patenterteilung : **02.03.88 Patentblatt 88/09**

(45) Bekanntmachung des Hinweises auf die Entscheidung über den Einspruch : **21.11.91 Patentblatt 91/47**

(84) Benannte Vertragsstaaten : **BE CH DE FR GB LI NL**

(56) Entgegenhaltungen :
**EP-A- 0 024 655**
**DE-B- 2 617 437**
**FR-A- 2 095 903**
**FR-A- 2 152 752**
**GB-A- 906 807**

(56) Entgegenhaltungen :
**INDUSTRIAL AND ENGINEERING CHEMISTRY PRODUCT RESEARCH AND DEVELOPMENT, Band 19, Nr. 2, Juni 1980, Seiten 136-146, Columbus, Ohio, US; Y. NEMOTO et al.: "The interaction between dyes and nonionic surfactants: the mode of action of nonionic surfactants in dyeing"**
**K. LINDNER "Tenside-Tensidhilfsmittel-Waschrohstoffe", Band 1, Teil II, Die anionenaktiven Verbindungen, Seite 757 (1964)**
**Ullmanns Encyclopädie der technischen Chemie, 4. Auflage, Band 2, Seiten 712-713 (1972)**
**K. MASTERS "Spray Drying Handbook", 3rd Edition, Seiten 543-545, John Wiley and Sons, N.Y. (1979)**

(73) Patentinhaber : **CIBA-GEIGY AG**
**Klybeckstrasse 141**
**CH-4002 Basel (CH)**

(72) Erfinder : **Balliello, Paolo, Dr.**
**Burstelstrasse 12**
**W-7888 Rheinfelden 8 (DE)**

(74) Vertreter : **Schwabe, Hans-Georg, Dipl.-Ing. et al**
**Patentanwälte Schwabe, Sandmair, Marx**
**Stuntzstrasse 16**
**W-8000 München 80 (DE)**

**EP 0 095 740 B2**

## Beschreibung

Die vorliegende Erfindung betrifft fest Präparate von Metallkomplexfarbstoffen und deren Verwendung zum Färben oder Bedrucken von Textilmaterial.

Feste Präparate von Metalkomplexfarbstoffen sind bereits bekannt. Diese enthalten beispielsweise den Farbstoff, ein Dispergiermittel, meistens ein solches anionischer Art, sowie weitere Zusätze, wie z.B. Coupagemittel, Netzmittel oder Staubbindemittel z. B. werden in der EP-A-24 655 mittels einer Wirbeschicht granulierte Aufbaugranulte beschrieben. Diese Präparate weisen jedoch oft Nachteile auf, wie eine ungenügende Kaltwasserlöslichtkeit, mangelhafte Dispergierbarkeit und/oder Benetzbarkeit in kaltem Wasser.

Der vorliegenden Erfindung lag die Aufgabe zugrunde, feste Farbstoffpräparate zu entwickeln, welche die genannten Nachteile nicht aufweisen.

Es wurde nun gefunden, dass solche Präparate von Metallkomplexfarbstoffen, die neben einem anionischen Dispergiermittel oder Dispergiermittelgemisch zusätzlich ein nichtionisches Aethylenoxid-Addukt enthalten und zudem mittels eines spezifischen Trockungsverfahrens, nämlich der Sprühtrocknung erhalten werden, überraschenderweise die genannten Nachteile nicht aufweisen.

Gegenstand der Erfindung sind somit feste Präparate von Metallkomplexfarbstoffen, erhalten durch Lösen oder Anschlämmen mindestens eines Metallkomplexfarbstoffes in Wasser unter Zusatz eines Ligninsulfonats, eines 2-Alkylbenzimidazoldisulfonates lessen Alkylrest 10-25 C-Atome aufweist und/oder eines Formaldehydkondensationsproduktes einer aromatischen Sulfonsäure als anionisches Dispergiermittel und 1 bis 20 Gew.-% bezogen auf das fertige Präparat eines nicht-ionischen Ethylenoxid-Adduktes mit einem Molgewicht von 200 bis 1 000, sowie gegebenenfalls weiteren Zusätzen, anschließendes Mischen der Komponenten und Sprühtrocknen bei einer Lufteingangstemperatur des Sprühturms bei 180°C bis 300 °C und einer Luftausgangstemperatur von 110°C bis 150°C, der Lösung bzw. Suspension.

Diese Präparate zeigen gegenüber bekannten Präparaten von Metallkomplexfarbstoffen, die kein Aethylenoxid-Addukt enthalten, und nicht mittels Sprühtrocknung hergestellt wurden, eine besere Benetzbarkeit und vor allem eine wesentlich besser Dispergierbarkeit bzw. Löslichkeit in kaltem Wasser. Die Aethylenoxid-Addukte verbessern jedoch nicht nur die Kaltwasserdispergierbarkeit bzw -löskichtkeit von Metallkomplexfarbstoffen, sondern wirken darüber hinaus auch als Entstäubungsmittel und erleichtern so die Herstellung und Anwendung der erfindungsgemässen Präparate.

Als nichtionische Aethylenoxid-Addukte kommen bevorzugt solche aus der Klasse der Umsetzungsprodukte von Aethylenoxid mit

a) gesättigten und/oder ungesättigten Fettalkoholen mit 6 bis 20 C-Atomen; oder

b) Alkylphenolen mit 4 bis 12 C-Atomen im Alkylrest; oder

c) gesättigten und/oder ungesättigten Fettaminen mit 14 bis 20 C-Atomen; oder

d) gesättigten und/oder ungesättigten Fettsäuren mit 14 bis 20 C-Atomen in Betracht.

Als Aethylenoxid-Addukte sind im einzelnen genannt:

a) Umsetzungsprodukte von gesättigten und/oder ungesättigten Fettalkoholen mit 6 bis 20 C-Atomen, mit 5 bis 30 Mol Aethylenoxid je Mol Hydroxylgruppe;

b) Umsetzungsprodukte von Alkylphenolen mit 4 bis 12 C-Atomen mit 5 bis 20 Mol, vorzugsweise 8 bis 15 Mol, Aethylenoxid je Mol phenolische Hydroxylgruppe;

c) Umsetzungsprodukte von gesättigten und/oder ungesättigten Fettaminen mit 14 bis 20 C-Atomen mit 5 bis 20 Mol Aethylenoxid je Mol Aminogruppe;

d) Umsetzungsprodukte von gesättigten und/oder ungesättigten Fettsäuren mit 14 bis 20 C-Atomen mit 5 bis 20 Mol Aethylenoxid je Mol Carboxylgruppe.

Von diesen Aethylenoxid-Addukten sind die unter b) genannten Umsetzungsprodukte bevorzugt.

Auch Gemische der Aethylenoxid-Addukte nach a), b), c) und d) untereinander sind verwendbar. Diese Gemische erhält man durch Mischen einzelner Umsetzungsprodukte oder direkt durch Aethoxylierung eines Gemisches der den Addukten zugrunde liegenden Verbindungen.

Als gesättigte und/oder ungesättigte Fetallkohole kommen für a) Dodecanol, Palmitylakohol, Stearylalkohol, Oleyalkohol oder Talgfettalkohole, vorzugsweise Hexanol, 2-Aethylexanol und Decanol in Betracht.

Als Alkylphenole für b) sind Butylphenol, Hexylphenol, vor allem jedoch Isooctylphenol, Nonylphenol und Dodecylphenol zu nennen.

Als Fettamine für c) kommen z. B neben Stearylamin, Palmitylamin und vor allem Oleylaminin in Betracht.

Für d) sind als gesättigte und/oder ungesättigte Fettsäuren z.B. Palmitinsaure, vor allem Stearinsäure und Oelsäure zu nennen.

Die Aethylenoxid-Addukte sind bekannt oder können nach an sich bekannten Verfahren hergestellt werden (siehe z.B.: N. Schönfeldt, Grenzflächenaktive Aethylenoxid-Addukte; Wissenschaftliche Verlagsgesellschaft mbH, Stuttgart, 1976).

Bei den Metallkomplexfarbstoffen handelt es sich beispielsweise um 1:1 oder 1:2Metallkomplexe von Azo- oder Azomethinfarbstoffen oder metallisierte Phthalocyanine, wie Kurpfer- oder Nickelphthalocyanine. Bei den 1:1 und 1:2-Metallkomplexen kommen vorzugsweise 1-1-Nickelkomplexe, 1:1-Kobaltkomplexe, 1:1-Kupferkomplexe, 1:1-Chromkomplexe, 1:1-Eisenkomplexe oder symmetrische bzw. asymetrische 1:2-Kobalkomplexe, 1:2-Eisenkomplexe oder 1:2-Chromkomplexe in Betracht, die als farbgebende Liganden z.B. o-Carboxy-o'-hydroxy-, o-Hydroxy-o'-amino- oder o,o'-Dihydroxyazofarbstoffe des Benzol-azobenzol-, Naphthalin-azo-naphthalin-, Benzol-azo-naphthalin, Benzol-azo-pyrazolon-, Benzol-azo-pyridon- oder Benzol-azoacetessigsäureamid- Typs aufweisen, wobei diese unsubstituiert oder auch substituiert sein können. Als Substituenten kommen z.B. in Betracht: Carboxyl- und Sulfonsäuregruppen, gegebenenfalls substituierte Sulfonsäureamine oder Alkylsulfone, Halogenatome oder die Nitro- oder Acetamidogruppe.

Bei den Azofarbstoffen kann es sich um Mono-, Dis- oder Polyazofarbstoffe handeln. In asymmetrischen 1:2-Metallkomplexfarbstoffen kommen neben den Azofarbstoffen auch farblose Lignaden, wie etwa zweizähnige Hydroxychinolinderivate, in Betracht.

Bevorzugt enthalten die erfindungsgemässen Praparate von wasserlöslichmachenden Gruppen freie 1:2-Metallkomplexfarbstoffe von Mono- und/oder Disazofarbstoffen, die als komplexgebundenes Metallion ein Chrom- oder Cobaltion aufweisen.

Die Präparate können einen Einzelfarbstoff oder auch Mischungen mehrerer Metallkomplexfarstoffe enthalten.

Bei den anionischen Dispergiermitteln handelt es sich um die üblichen Dispergiermittel für Metallkomplexfarbstoffe, insbesondere um Formaldehydkondensationsprodukte aromatischer Sulfonsäuren oder um 2-Alkylbenzimidazoldisulfonate, deren Alkylrest 10 bis 25 C-Atome aufwest, oder auch um Lignisulfonate. Als Formaldehydkondensate sind genannt Kondansationsprodukte aus Formaldehyde und Naphthalinsulfonsäure oder aus Formaldehyd, Naphthalinsulfonsäure und Benzolsulfonsäure, oder ein Kondensationsprodukt aus Rohkresol, Formaldehyd und Napthtalinsulfonsäure, sowie Kondensate aus Phenol-, Kresol- oder Naptholsuldonsäure und Formaldehyd.

Als weitere Zusätze können die erfindungsgemässen Präparate z.b. noch Coupagemittel, wie Dextrin, Harnstoff oder anorganische Salze, etwa Natriumchlorid oder Natriumsulfat, sowie Netzmittel, wie Nonylphenoldiglykoläthersulfat oder Dodecylbenzolsulfonat, oder auch Anti-schaummittel und/oder Bindemittel enthalten.

Präparate, die sich durch eine besonders gute Kaltwasserdispergierbarkeit auszeichnen, liegen in Form von Sprühgranulaten vor, welche die folgende Zusammensetzung aufweisen:

a) 30-90 Gew.% eines Metallkomplexfarbstoffes, insbesondere 40-80 Gew.% eines von wasserlöslichmachenden Gruppen freien 1:2-Chromkomplexfarbstoffes,

b) 1-20 Gew.% eines nichtionischen Aethylenoxidadduktes mit einem Molgewicht von 200 bis 1000, insbesondere 5-10 Gew.% eines Alkyl-($C_4$-$C_{12}$)-phenol-Aethoxylierungsproduktes mit 8-15 Mol Aethylenoxid pro Mol Alkylphenol,

c) 5-50 Gew.% eines Ligninsulfonates, eines 2-Alkybenzimidazoldisulfonates oder eines Formaldehydkondensationsproduktes einer aromatischen Sulfonsäure, insbesondere jedoch 10-25 Gew.% eines Gemisches aus 2-Alkylbenzimidazoldisulfonat und einem Naphthalinsulfonsäure-Formaldehyd-Kondensat, sowie gegebenenweitere Zusätze.

Wird der Metallkomplexfarbstoff als Rohfarbstoff eingesetzt und ist dieser nur beschränkt wasserlöslich, so wird die nach Anschlämmen des Farbstoffs in Wasser erhaltene Suspension nach Zusatz des anionischen Dispergiermittels oder Dispergiermittelgemisches und des Aethylenoxid-Adduktes zweckmässigerweise einem Mahlprozess unterworfen, bis die Primärteilchengrösse der Farbstoffpartikel < 10 µm, vorzugsweise 1-3 µm, ist. das Aethylenoxid-Addukt kann auch erst nach der Nassmahlung zugegeben werden. Im Anschlluss an die Mahlung erfolgt dann die Sprühtrocknung.

Zur Sprühtrocknung oder auch Düsensprühgranulierung wied die Farbstofflösung oder -suspension z.B. mittels eine Drall-Druckdüse, einer pneumatischer Düse oder einem rotierenden Versprüher in den Sprühturm eingedüst. Die Lufteingangstemperatur des Sprüturms liegt bei 180 bis 300°C, die Luftausgangstemperatur bei 110 bis 150°C.

Die Farbstoffe können z.B. als getrocknete Ware oder als Presskuchen oder auch in Form der Syntheselösung oder -suspension eingesetzt werden.

Falls vermahlen wird, kann man auch einen Teil der Komponente erst nach dem Vermahlen zusetzen. Es ist auch möglich, zunächst nur einen Teil der Komponen ten miteinander zu vermischer und den Rest, z.B. das Netzmittel, erst zum Schluss, z.B. nach dem Trockenen, zuzugeben.

Wichtig für die löslichkeitsverbessernde bzw, die dispergierbarkeitsund benetzbardeitserhöhende Wirkung der Aethylenoxid-Addukte scheint deren Wechselwirkung mit dem Metallkomplexfarbstoff zu sein. Dabei kommt es zur Bildung von Anlagerunsprodukten-kalorimetische Messungen ergeben eine leicht exotherme Bildungswärme-wobei eine Wechselwirkung sowohl zwischen Farbstoff und hydrophobem Rest des Aethylenoxid-Addukts, als auch zwischen dessen hydrophiler Polyäherkette und dem Farbstoffmolekül stattfinden kann (siehe dazu z.B. Y. Nemoto und H. Funahashi; Ind. Eng. Chem. Prod. Res. Dev. *19*, (1980) 136-142).

Es ist demach auch möglich, den Metallkomplexfarbstoff zunächst mit dem Aethylenoxid-Addukt umzusetzen und das so erhaltene Anlagerunsprodukt anschliessend mit einem anionischen Dispergiermittel zu versetzen, gegebenfalls einer Nassmahlung zu unterwerfen und im Sprühtrockner zu trocknen.

Die erfindungsgemässen Metallklkomplexfarbstoffpräparate, Granulate oder Pulver sind leicht benetzbar und zeichenen sich durch eine Kaltwasserlöslichkeit oder -dispergierbarkeit von ≥ 30 g/l aus. Sie können direkt zur Herstellung von Färbebädern, Klotzflotten oder Druchpasten verwendet werden. Diese eignen sich zum Färben oder Bedrucken vor allem von Textilmaterial, z.B. aus Wolle oder synthetischem Polyamid.

Die folgenden Beispiele dienen zur Erläuterung der Erfindung; Prozente bedeuten Gewichtsprozente, Viskositätsmessungen wurden mit dem Contraves Rheomat 115 durchgeführt und kalorimetrische Messungen mit dem Präzisions-Kalorimeter LKB 8700-1.

Beispiel 1

Man schlämmt 1,5 kg des Rohfarbstoffs der Formel

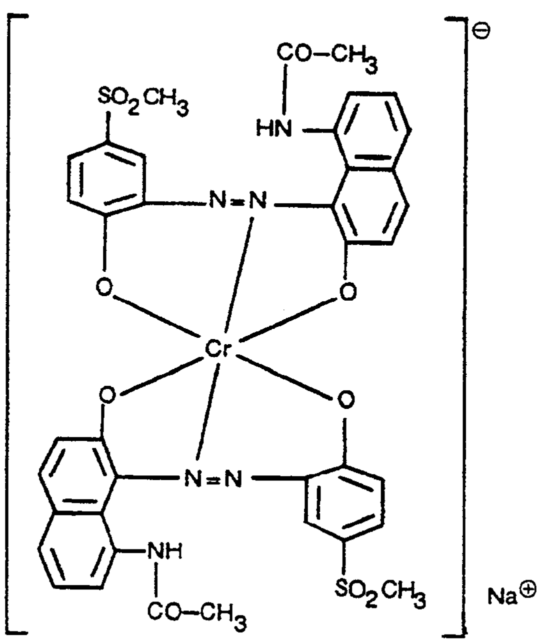

zusammen mit 0,25 kg Naphthalinsulfonsäure-Formaldehydkondensat (als Natriumsalz), 0,1 kg 2-Heptadecylbenzimidazoldisulfonsäure-Natriumsalz und 0,15 kg Nonylphenolpentadecaglycoläther in ca. 1,5 Liter Wasser an.

Das so erhaltene Gemisch wird zu einem homogenen Teig verrührt, mit einem Feststoffgehalt von ca. 30% und einem pH-Wert von ca. 10. Die Suspension wird anschliessend einer Nassmahlung unterworfen, die bei einer Korngrösse von 1 bis 3 µm beendet wird. Die Mahldauer beträgt ca. 8 Stunden. Die so erhaltene Suspension lässt sich nahezu rückstandsfrei durch eine Papierfilter SS 1450 filtrieren.

Nach der Mahlung wird die Farbstoffsuspension durch Zugabe von Naphthalinsulfonsäure-Formaldehyd-Kondensat (Natriumsalz) auf den geforderten Endfarbstoffgehalt eingestellt und dann sprühgranuliert.

Die Sprühgranulierung erfolgt in einem Sprühturm, der mit einer Einstoffdüse ausgerüstet ist. Die Lufteingangstemperatur beträgt ca. 210°C, die Luftausgangstemperatur 110 bis 150°C, die Viskosität der Suspension ca. 0,3 Poise.

Man erhält so ein festes Farbstoffpräparat der folgenden Zusammensetzung:

71,3% Rohfarbstoff,
11,6% Naphthalinsulfonsäure-Formaldehydkondensat (NaSalz),
5,0% 2-Heptadecylbenzimidazoldisulfonsäure-Natriumsalz,
7,1 % Nonylphenolpentadecaglykoläther,
5% Restfeuchte.

Das Präparat hat eine Kaltwasserdispergierbarkeit von über 30 g/l bei 20°C, ist einwandfrei benetzbar und

eignet sich zum Färben und Bedrucken von Textilmaterialen aus Wolle oder Polyamid.

Ein Präparat der gleichen Zusammensetzung wie zuvor angegeben, jedoch ohne Nonylphenolpentadecaglykoläther, weist eine Kaltwasserdispergierbarkeit von weniger als 1 g pro Liter auf.

Die kalorimetrisch bestimmte Bildungswärme des Adduktes aus Cr 1:2 Metallkomplexfarbstoff und Nonylphenolpentadecaglykoläther beträgt ca. - 10 kJ/Mol.

Beispiel 2

64,6 g des feuchten Rohfarbstoffs der Formel

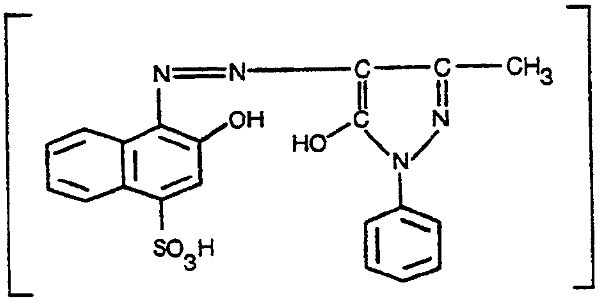

1:1 Cr–Komplex

werden zusammen mit 32,3 g Naphthalinsulfonsäure-Formaldehydkondensat (als Natriumsalz), 7,9 g Nonylphenolpentadecaglykoläther und 4,8 g 2-Heptadecylbenzimidazoldisulfonsäure-Natriumsalz in 110 ml Wasser angeschlämmt und nach Zusatz von 400 g Glasperlen (Ø 2 mm) 4 Stunden lang gemahlen. Die Teilchengrösse der Farbstoffpartikel liegt danach bei ≤ 5 µm. Die so erhaltene Farbstoffsuspension ist dünnflüssig (Viskosität 24,5 mPas) hat einen pH von 6,2 und eine Dichte von 1,13. Nach der Sprühtrocknung (Niro-Scheibentrockner) erhält man ein Farbstoff-granulat der folgenden Zusammensetzung:

50% Rohfarbstoff
32,3% Naphthalinsulfonsäure-Formaldehydkondensat (NaSalz)
7,9% Nonylphenolpentadecaglykoläther
4,8% 2-Heptadecylbenzimidazoldisulfonsäure-Natriumsalz
5% Restfeuchte

Das Präparat hat eine Kaltwasserdispergierbarkeit von 30 g/l.

Beispiel 3

Verfährt man wie im Beispiel 2 beschrieben, ersetzt jedoch den dort verwendeten Nonylphenolpentadecaglykoläther gegen die gleiche Menge eines Oelsäureäthoxylats mit 6 Mol Aethylenoxid pro Mol Oelsäure, so erhält man nach der Mahlung ebenfalls eine dünnflüssige Suspension (Viskosität 29,5 mPas; pH 6,0; Dichte 1,14) die sich problemlos sprühtrocknen lässt und ein Präparat mit einer Kaltwasserdispergierbarkeit von 30 g/l ergibt.

Die Kaltwasserdispergierbarkeit der Präparate wird wie folgt ermittelt (Einstreutest):

Bestimmte Mengen des Farbstoffpräparates werden jeweils in 200 ml entsalztes Wasser, das auf ca. 20°C temperiert ist, eingetragen und 2 Minuten gerührt (400 ml Becherglas, Magnetrührer 750 U/min), Anschliessend wird die Farbstofflösung filtriert (Papierfilter SS 1450 CV, Ø 7 cm) und das Filterpapier mit 50 ml entsalztem Wasser nachgespült.

Als Kaltwasserdispergierbarkeit wird die maximale Menge an Farbstoff in g pro Liter angegeben, die sich vollständig dispergieren lässt, d.h. eine Dispersion ergibt, die rückstandsfrei filtrierbar ist.

**Patentansprüche**

1. Feste Präparate von Metallkomplexfarbstoffen, erhalten durch Lösen oder Anschlämmen mindestens eines Metallkomplexfarbstoffes in Wasser unter Zusatz eines Ligninsulfonats, eines 2 -Alkylbenzimidazoldisulfonates, dessen Alkylrest 10 bis 25 C-Atome aufweist und(oder eines Formaldehydkondensationsproduktes einer aromatischen Sulfonsäure als anionisches Dispergiermittel und 1 bis 20 Gew. -%, bezogen auf das fertige Präparat eines nichtionischen Ethylenoxid-Adduktes mit einem Molgewicht von 200 bis 1000, sowie gegebenenfalls weiteren Zusätzen, anschließendes Mischen der Komponenten und Sprühtrocknen bei einer Luft eingangstemperatur des Sprühturms bei 180 °C bis 300 °C und einer Luftausgangstemperatur von 100 °C bis 150 °C, der Lösung bzw. Suspension.

2. Feste Farbstoffpräparate gemäss Anspruch 1, dadurch gekennzeichnet, dass diese als Aethylenoxid-Addukte ein Umsetzungsproduckt von Aethylenoxid mit

a) gesättigten und/oder ungesättigten Fetallkoholen mit 6 bis 20 C-Atomen, oder

b) Alkylphenolen mit 4 bis 12 C-Atomen in Alkylrest, oder

c) gesättigten und/oder ungesättigten Fettaminen mit 14 bis 20 C-Atomen, oder

d) gesättigten und/oder ungesättigten Fettsäuren mitt 14 bis 20 C-Atomen enthalten.

3. Feste Farbstoffpräparate gemäss Anspruch 2, dadurch gekennzeichnet, dass diese als Aethylenoxid-Addukte eine Umsetzungsprodukt eines Alkylphenols, mit 4 bis 12 C-Atomen in Alkylrest, mit 8 bis 15 Mol Aethylenoxid pro Mol Alkylphenol enthalten.

4. Feste Farbstoffpräparate gemäss Ansprüchen 1 bis 3,dadurch gekennzeichnet, dass diese als Farbstoff einen von wasserlöslichmachenden Gruppen freien 1:2-Metallkomplexfarbstoff enthalten, der als Liganden einen Mono- und/oder Disazofarbstoff und als zentrales Metallion ein Cr- oder Co-Ion aufweist.

5. Feste Farbstoffpräparate gemäß Anspruch 1, dadurch gekennzeichnet, daß diese als weitere Zusätze ein Coupagemittel, Netzmittel, Antischaummittel und/oder Bindemittel enthalten.

6. Feste Farbstoffpräparate gemäss Anspruch 1, dadurch gekennzeichnet, dass diese

a) 30-90 Gew.% eines Metallkomplexfarbstoffes;

b) 1-20 Gew.% eines nichtionischen Aethylenoxid-Addukts mit einem Molgewicht von 200 bis 1000;

c) 5-50 Gew.% eines Ligninsulfonats, eines 2-Alkylbenzimidazolidisulfonats und/oder eines Formaldehydkondensationsproduktes einer aromatischen Sulfonsäure sowie gegebenenfalls weitere Zusätze enthalten.

7. Feste Farbstoffpräparate gemäss Anspruch 6, dadurch gekennzeinchet, dass diese

a) 40-80 Gew.% eines von wasserlöslichmachenden Gruppen freien 1:2-Chromkomplexfarbstoffes;

b) 5-10 Gew.% eines Alkyl-($C_4$-$C_{12}$)-phenol-Aethoxylierungsproduktes, mit 8 bis 15 Mol Aethylenoxid pro Mol Alkylphenol;

und

c) 10-25 Gew.% eines Gemisches aus 2-Alkylbenzimidazoldisulfonat und einem Naphthalinsulfonsäure-Formaldehyd-Kondensat enthalten.

8. Feste Farbstoffpräparate gemäss Anspruch 1, dadurch gekennzeinchet, dass man bei deren Herstellung die wässrige Suspension der Komponenten vor der Sprühtrocknung einem Mahlprozess unterwirft, bis die Primärteilchengrösse der Farbstoffpartikel ≥ 10 μm ist.

9. Verwendung der festen Farbstoffpräparate gemäss Anspruch 1 zum Färben oder Bedrucken von Textilmaterial aus Wolle oder synthetischem Polyamid.

## Revendications

1. Préparations solides de colorants à complexe métallique, obtenues par dissolution ou mise en suspension d'au moins un colorant à complexe métallique dans de l'eau avec addition d'un sulfonate de lignine, d'un disulfonate de 2-alkylbenzimidazole dont radical ayant 10 à 25 atomes de carbone et/ou d'un produit de condensation de formaldéhyde et d'un acide sulfonique aromatique comme dispersant anionique et de 1 à 20 % en poids, par rapport à la préparation finale, d'un produit non-ionique d'addition de l'oxyde d'éthylène, ayant une masse moléculaire de 200 à 1000, ainsi que le cas échéant d'autres additifs, puis mélange des constituants et séchage par pulvérisation de la solution ou de la suspension à une température d'air à l'entrée du tour de séchage par pulverisation près de 180 °C à 300 °C et à une température d'air à la sortie de 110 °C à 150 °C.

2. Préparations de colorants selon la revendication 1, caractérisées en ce que celles-ci contiennent, comme produit d'addition de l'oxyde d'éthylène, un produit de réaction de l'oxyde d'ethylène avec

a) des alcools gras saturés et/ou insaturés $C_6$ à $C_{20}$, ou

b) des alkylphénols ayant 4 à 12 atomes de carbone dans le radical alkyle, ou

c) des amines grasses saturées et/ou insaturées en $C_{14}$ à $C_{20}$, ou

d) des acides gras saturés et/ou insaturés en $C_{14}$ à $C_{20}$.

3. Préparations solides de colorants selon la revendication 2, caractérisées en ce que celles-ci contiennent, comme produit d'additon de l'oxyde d'éthylène, un produit de réaction d'un alkylphénol ayant 4 à 12 atomes de carbone dans le radical alkyle, avec 8 à 15 moles d'oxyde d'éthylène par mole d'alkylphénol.

4. Préparations solides de colorants selon les revendications 1 à 3, caractérisées en ce que celles-ci contiennent comme colorant un colorant à complexe métallique 1:2 except de groupes hydrosolubilisants, qui présents comme coordinats un colorant mono- et/ou disazoique et comme ion métallique central un ion Cr- ou

Co-.

5. Préparations solides de colorants selon la revendication 1, caractérisé en ce que celles-ci contiennent comme autres additifs un agent de coupage, un agent mouillant, un anti-mousse et/ou un liant.

6. Préparations solides de colorants selon la revendication 1, caractérisées en ce que celles-ci contiennent.

a) 30 à 90% en poids d'un colorant à complexe métallique.

b) 1 à 20% en poids d'un produit non-ionique d'addition de l'oxyde d'ethylène, ayant une masse moléculaire de 200 à 1000,

c) 5 à 50% en poids d'un lignosulfonate, d'un 2-alkylbenzimidazoledisulfonate et/ou d'un produit de condensation du formaldéhyde et d'un acide sulfonique aromatique, ainsi que le cas échéant d'autres additifs.

7. Préparations solides de colorants selon la revendication 6, caractérisées en ce que celles-ci contiennent.

a) 40 à 80% en poids d'un colorant à complexe de chrome 1:2 exempt de groupes hydrosolubilisants;

b) 5 à 10% en poids d'un produit d'éthoxylation d'un (alkyl en $C_4$ à $C_{12}$)-phénol, ayant 8 à 15 moles d'oxyde d'éthylène par mole d'alkylphénol; et

c) 10 à 25% en poids d'un mélange de 2-alkylbenzimidazoledisulfonate et d'un condensat d'acide naphtalènesulfonique et de formaldéhyde.

8. Préparations solides de colorants selon la revendication 1, caractérisées en ce que lors de leur préparation, on soumet la suspension aqueuse des constituants, avant le séchage par pulvérisation, à une opération de broyage, jusqu'à ce que la taille de particules primaires des particules de colorant soit inférieure à 10 microns.

9. Utilisation des préparations solides de colorants selon la revendication 1, pour la teinture ou l'impression d'une matière textile de laine ou de polyamide synthétique.

**Claims**

1. A solid formulation of a metal complex die, which formulation is obtained by dissolving or suspending at least one metal complex die in water with the addition of a lignine sulfonate, a 2-alkylbenzimidazoldisulfonate the alkyl residue of which has 10 to 25 carbon atoms and/or a formaldehyde condensation product of an aromatic sulfonic acid as the anionic dispersant and 1 to 20 % by weight, based on the final formulation, of a non-ionic ethylene oxide adduct having a molecular weight of 200 to 1000, and optionally further ingredients, subsequently mixing the components and spray drying the solution or suspension, respectively, at an air inlet temperature of the spray drying tower near 180 °C to 300 °C and at air outlet temperature of from 110 °C to 150 °C.

2. A solid dye formulation according to Claim 1, wherein the ethylene oxide adduct is a reaction product of ethylene oxide with

a) a saturated and/or unsaturated fatty alcohol containing 6 to 20 carbon atoms, or

b) an alkylphenol containing 4 to 12 carbon atoms in the alkyl moiety, or

c) a saturated and/or unsaturated fatty amine containing 14 to 20 carbon atoms, or

d) a saturated and/or unsaturated fatty acid containing 14 to 20 carbon atoms.

3. A solid dye formulation according to Claim 2, wherein in the ethylene oxide adduct is a reaction product of an alkylphenol containing 4 to 12 carbon atoms in the alkyl moiety with 8 to 15 moles of ethylene oxide per mole of alkylphenol.

4. A solid dye formulation according to Claims 1 to 3, wherein the dye is a 1:2 metal complex dye which does not contain water-solubilising groups and contains as ligand a monoazo and/or disazo dye and, as central metal ion, a chromium or cobalt ion.

5. A solid dye formulatioon according to Claim 1, which contains an diluent, a wetting agent, an antifoam and/or a binder as further ingredients.

6. A solid dye formulation according to Claim 1, which contains

a) 30-90% by weight of a metal complex dye,

b) 1-20% by weight of a non-ionicethylene oxide adduct having a molecular weight of 200 to 1000,

c) 5-50% by weight of a lignosulfonate, a 2-alkylbenzimidazole disulfonate and/or of a condensate of formaldehyde with an aromatic sulfonic acid, and optionally further ingredients.

7. A solid dye formulation according to Claim 6, which contains

a) 40-80% by weight of a 1:2 chromium complex dye which does not contain water-solubilising groups.

b) 5-10% by weight of an alkyl-($C_4$-$C_{12}$)-phenol ethoxylation product with 8 to 15 moles of ethylene oxide per mole of alkylphenol, and

c) 10-25% by weight of a mixture of a 2-alkylbenzimidazole disulfonate and a naphthalenesulfonic acid/formaldehyde condensate.

8. A solid dye formulation according to Claim 1, which is prepared by subjecting the aqueous suspension of the components, before spray drying, to a grinding procedure until the primary particle size of the dye particles is < µm.

9. Use of a solid dye formulation according to Claim 1 for dyeing or printing textile material of wool or synthetic polyamide.